Europäisches Patentamt

European Patent Office

Office européen des brevets

(11) Numéro de publication: **0 257 455 B1**

# FASCICULE DE BREVET EUROPEEN

(45) Date de publication de fascicule du brevet:
**21.11.91**

(51) Int. Cl.⁵: **G01M 3/28**

(21) Numéro de dépôt: **87111684.4**

(22) Date de dépôt: **12.08.87**

(54) **Tête d'obturation pour banc d'épreuve hydraulique de tubes.**

(30) Priorité: **14.08.86 FR 8611765**

(43) Date de publication de la demande:
**02.03.88 Bulletin 88/09**

(45) Mention de la délivrance du brevet:
**21.11.91 Bulletin 91/47**

(84) Etats contractants désignés:
**AT DE ES GB**

(56) Documents cités:
**DE-A- 3 425 114**
**DE-C- 3 307 813**
**FR-A- 2 564 973**
**GB-A- 734 112**
**US-A- 4 149 731**

(73) Titulaire: **GEC ALSTHOM SA**
**38, avenue Kléber**
**F-75116 Paris(FR)**

(72) Inventeur: **Ollivaud, Bernard**
**Launay Le Cellier**
**F-44850 Ligne(FR)**
Inventeur: **Blot, Philippe**
**1 avenue Emile Boissier**
**F-44000 Nantes(FR)**

(74) Mandataire: **Weinmiller, Jürgen et al**
**Lennéstrasse 9 Postfach 24**
**W-8133 Feldafing(DE)**

## Description

La présente invention concerne une tête d'obturation pour banc d'épreuve hydraulique de tubes.

Les tubes destinés principalement à l'industrie pétrolière ou au transport de fluides sont généralement éprouvés, avant livraison aux utilisateurs, à des pressions importantes qui créent dans les tubes des contraintes voisines de la limite élastique.

Pour réaliser cette épreuve hydraulique, le tube est placé sur un banc qui comporte à chaque extrémité du tube une tête d'obturation venant coiffer l'extrémité du tube en assurant son étanchéité.

L'une des têtes d'obturation est alimentée en eau pour la mise à l'épreuve du tube. La structure du banc permet de tenir les poussées importantes induites par la pression hydraulique d'épreuve s'exerçant sur la surface obturée à chaque extrémité.

Ainsi, l'invention concerne une tête d'obturation pour banc d'épreuve hydraulique de tubes comprenant un corps de tête comportant un premier alésage dans lequel peut s'introduire librement une extrémité d'un tube, un deuxième alésage de diamètre supérieur à celui du premier alésage au fond duquel est introduit un joint élastique, des moyens d'amenée d'un fluide sous pression dans une chambre constituée entre la périphérie extérieure du joint et ledit second alésage permettant sa contraction contre ledit tube, ledit joint étant axialement immobilisé du côté opposé à l'extrémité du tube par une série annulaire de secteurs d'appui indépendants dudit joint, lesdits secteurs comportant des moyens de commande de coulissement permettant leur serrage contre le tube ainsi que leur écartement, lesdits secteurs comportant des moyens de retenue axiale du côté opposé audit joint.

Une tête d'obturation ainsi constituée est connue par les documents US-A-4537407 et FR-A-2571494.

Cependant le joint d'étanchéité est peu accessible et requiert pour son remplacement un démontage d'une pluralité de pièces et de tous les secteurs séparément.

La présent invention a pour but de proposer une tête d'obturation permettant un remplacement extrêmement facile et rapide du joint d'étanchéité. Elle a également pour but d'assurer un meilleur emmagasinement du joint en ne laissant aucun interstice de passage et enfin de n'avoir qu'une commande unique pour le serrage et le desserage des secteurs d'appui.

L'invention a ainsi pour objet une tête d'obturation telle que définit ci-dessus et caractérisée en ce que les moyens de retenue axiale des secteurs d'appui comportent un presse garniture fixé sur ledit corps de tête, une plaque de frottement étant en contact avec le presse garniture et comportant un rebord périphérique circulaire s'engageant, en position écartée des secteurs d'appui, dans une gorge réalisée à la périphérie desdits secteurs d'appui.

Selon une autre caractéristique, lesdits secteurs se recouvrent partiellement et un anneau anti-extrusion de section en forme de coin est disposé ajusté dans ledit second alésage entre le joint et lesdits secteurs d'appui.

L'invention sera mieux comprise à la lumière de la description d'un exemple de mise en oeuvre de l'invention faite ci-après en référence au dessin annexé dans lequel :

La figure 1 est une représention schématique montrant un tube à essayer muni à chacune de ses extrémités d'une tête d'obturation selon l'invention.

La figure 2 montre schématiquement une tête d'obturation selon l'invention avec son circuit de commande hydraulique.

La figure 3 montre en demi-coupe axiale une tête d'obturation selon l'invention dans sa position de repos c'est-à-dire joint non serré.

La figure 4 est une vue similaire à celle de la figure 3 mais dans une position intermédiaire entre la position de repos et la position étanche de fonctionnement.

La figure 5 représente la tête d'obturation dans sa position étanche de fonctionnement, joint serré.

La figure 6 est une coupe selon VI-VI de la figure 5.

La figure 7 est une vue partielle montrant en vue de dessus par rapport à la figure 6, uniquement les secteurs d'appui, dans leur position resserrée, et la plaque de frottement partiellement coupée.

La figure 8 est une vue partielle en perspective permettant de mieux voir la forme de certaines pièces.

La figure 9 est une demi-vue montrant uniquement les secteurs d'appui serrés autour du tube et les tiges de manoeuvre. En traits interrompus mixtes, les secteurs sont montrés en position écartée.

La figure 10 montre en perspective deux secteurs d'appui.

La figure 11 montre la tête d'obturation selon l'invention dans une position en cours de démontage des secteurs d'appui.

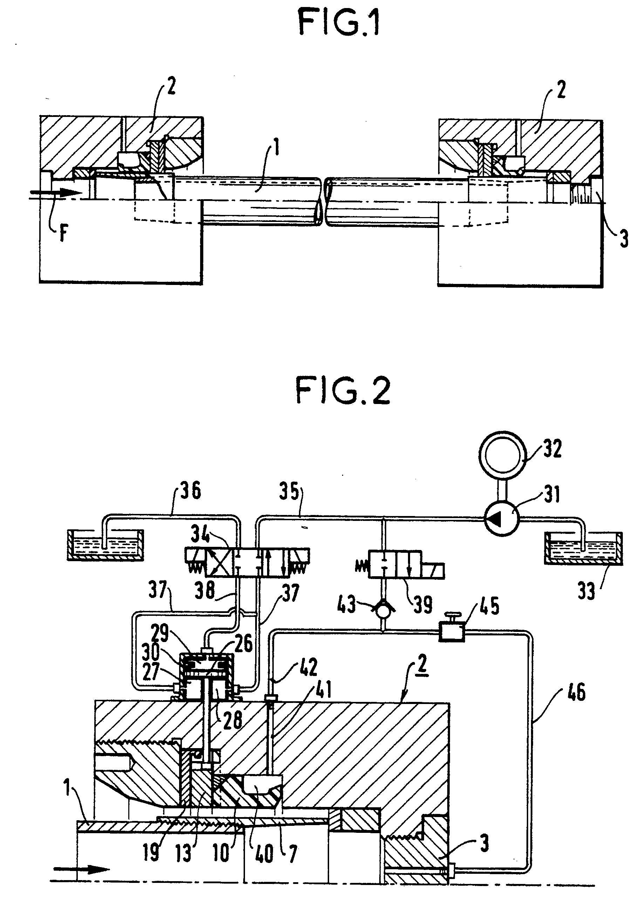

Sur la figure 1 on voit donc un tube 1 dont on doit tester l'étanchéité et qui, pour ce faire, est soumis à une épreuve de haute pression hydraulique. Pour cela, chaque extrémité du tube est coiffée par une tête d'obturation 2 comportant un système d'étanchéité s'appliquant sur le pourtour extérieur du tube. La pression hydraulique est envoyée dans le tube dans le sens de la flèche F par le fond de la tête d'obturation située à gauche sur la figure 1, le fond de la tête d'obturation de droite étant évidemment bouchée, par exemple par un obturateur 3. On pourrait également envoyer la pression par les deux extrémités.

Dans l'exemple de réalisation décrit, on a représenté sur les figures suivantes une tête d'obturation dont le fond est bouché par un obturateur 3. On suppose donc que le fluide hydraulique est introduit uniquement par le fond de la tête d'obturation située à l'autre extrémité du tube.

Les deux têtes d'obturation 2 sont évidemment solidaires d'un bâti de banc d'épreuve, non représenté, permettant d'écarter et de rapprocher une tête d'obturation par rapport à l'autre et de supporter les efforts de poussées axiales importantes subies par les têtes d'obturation lors des essais.

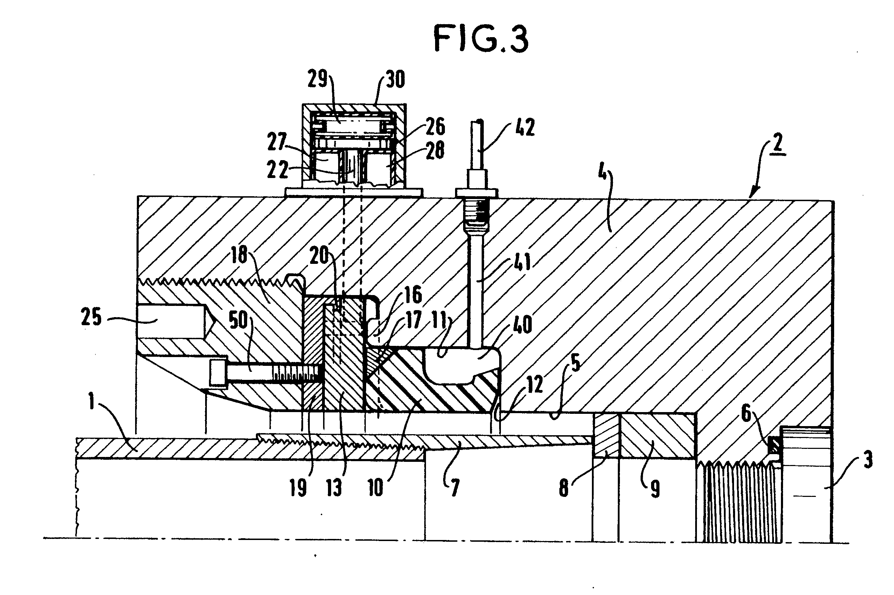

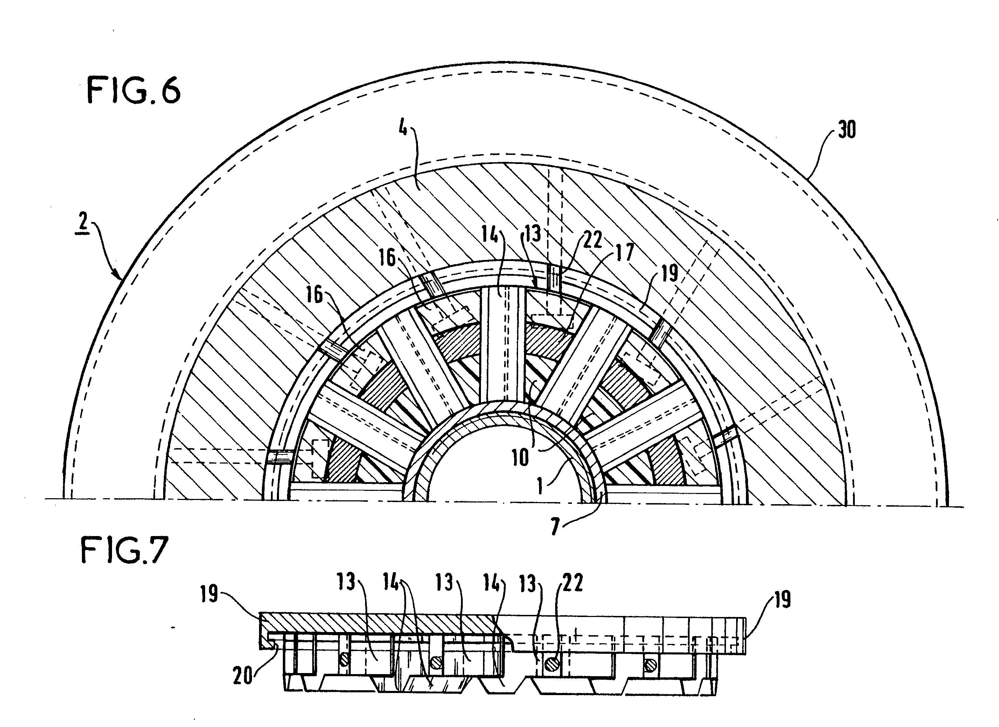

En se référant aux figure 3 à 11, une tête d'obturation 2 selon l'invention comprend un corps de tête 4 percé d'un premier alésage 5 et dont le fond est fermé par un obturateur vissé 3 muni d'un joint 6. A l'intérieur de l'alésage 5 est introduit une extrémité du tube 1 à tester. Généralement, comme c'est le cas dans l'exemple décrit, le tube 1 est muni à l'une de ses extrémités, lors de son essai hydraulique, de son manchon d'accouplement 7 avec un autre tube et c'est autour de ce manchon 7 que doit être réalisé l'étanchéité entre le manchon et la tête d'obturation 2. A l'autre extrémité du tube, l'essai se fait généralement sans manchon d'accouplement et donc l'étanchéité est réalisée directement entre le tube 1 et la tête d'obturation 2.

Le tube est donc introduit dans l'alésage 5 jusqu'en butée contre des pièces de butée 8, 9.

Un joint élastique 10, dont la section a une vague forme de L est introduit dans le fond d'un deuxième alésage 11 pratiqué dans le corps de tête 4. Cet alésage a un diamètre supérieur à celui du premier alésage 5.

Dans la position de repos du joint 10, telle que représentée sur la figure 3, le diamètre intérieur du joint 10 est égal ou supérieur au diamètre du premier alésage 5 de telle sorte que le tube 1, puisse être introduit sans risque d'endommagement du joint.

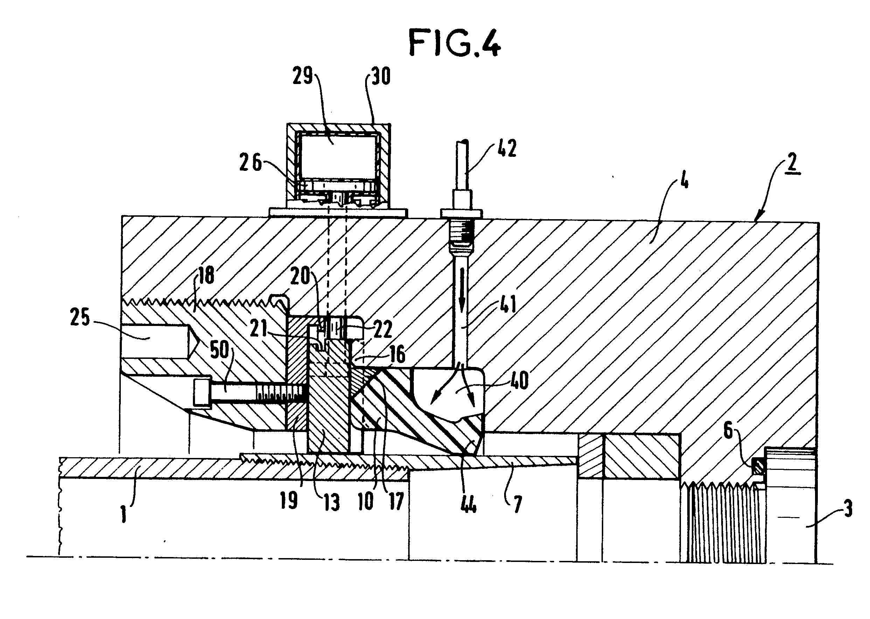

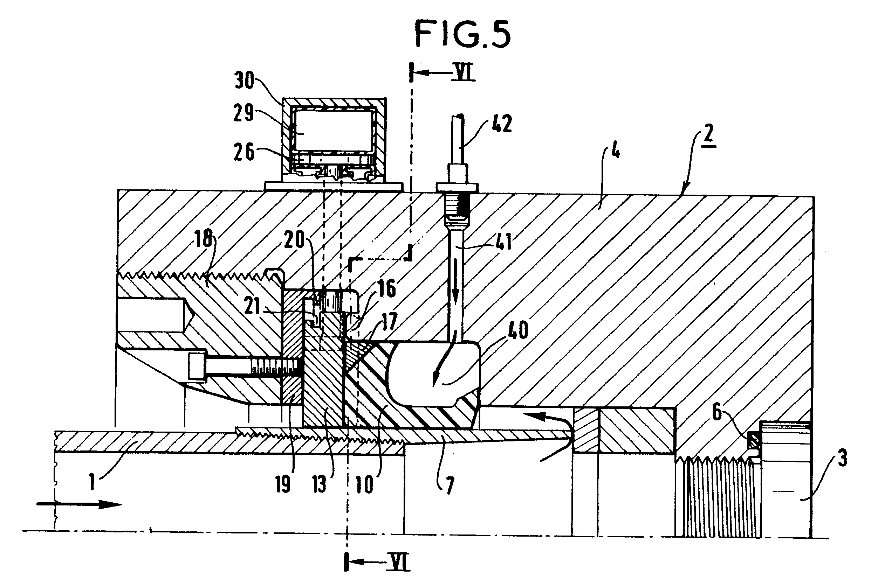

Du côté de l'extrémité du tube, le joint 10 est immobilisé axialement contre le fond 12 du deuxième alésage 11 et du côté opposé, il est en appui contre une série annulaire de secteurs d'appui 13 indépendants du joint 10 et se recouvrant partiellement. Ces secteurs, en position de repos rétractés comme représenté sur la figure 3, peuvent venir se serrer contre le tube (le manchon 7 dans le case de l'exemple décrit) en se resserrant radialement et circonférentiellement, les parties se recouvrant, glissant les une contre les autres augmentant leur surface de recouvrement (la diminuant lorsqu'ils s'écartent du tube). Sur les figures 4 et 5, les secteurs d'appui 13 sont en position contractée contre le manchon 7.

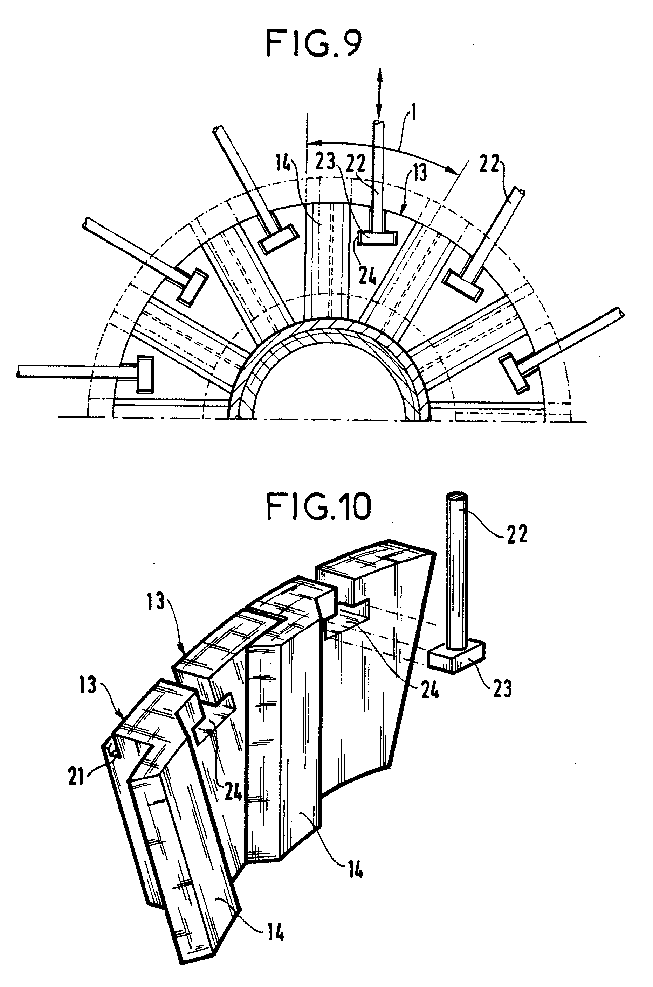

La figure 10 montre en perspective deux de ces secteurs 13 dans une position relative correspondant à un serrage maximal. On voit en effet que les parties en recouvrement sont en butées l'une contre l'autre.

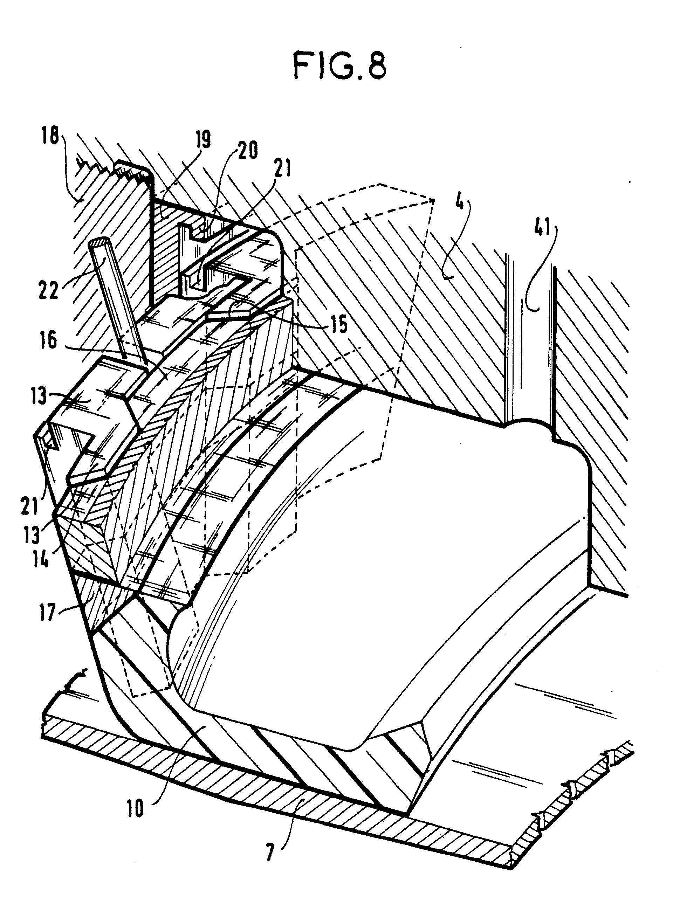

Lors des déplacements des secteurs d'appui 13, ceux-ci sont guidés par leur parties avancées de recouvrement 14 qui coulissent dans des rainures 15 (figure 8) de forme complémentaires, trapézoïdales, pratiquées dans le corps de tête 4. Sur les figures 3, 4, 5, on voit les parties de matière 16 entre ces rainures 15.

Un anneau anti-extrusion 17 dont la section est en forme de coin (triangle, rectangle isocèle) est également introduit d'une manière adjustée dans le second alésage 11, entre le joint élastique 10 et les secteurs d'appui 13. Cet anneau anti-extrusion évite l'extrusion radiale du joint. Il comporte également des rainures correspondant aux parties avancées 14 des secteurs d'appui 13 permettant ainsi leur coulissement radial.

De même, le joint 10 comporte également des rainures complémentaires de ces parties avancées 14 de recouvrement des secteurs d'appui.

La perspective de la figure 8 permet de mieux se rendre compte de la forme et de la disposition des différentes pièces. Dans cette perspective, les secteurs 13 ainsi que le joint 10 sont représentés en position contractée, serrée contre le manchon 7, donc correspondant à la position représentée par la figure 5.

Les secteurs d'appui 13 sont retenus axialement par un presse garniture 18 vissé dans le corps de tête 5. Une plaque de frottement 19 est fixée par des vis telles que 50 au presse garniture 18. Les sectuers d'appui 13 glissent, lors de leur mouvement contre cette plaque de frottement 19.

La plaque de frottement 19 comporte un rebord périphérique circulaire 20 qui, en position écartée des secteurs d'appui 13 (figure 3), vient s'engager dans une gorge 21 (figure 4, 5) réalisée à la périphérie extérieure des secteurs d'appui. Cette disposition permet le démontage rapide de l'ensemble des secteurs d'appui 13 pour, par exemple, changer le joint 10. Il suffit pour cela, aucun tube 1 n'étant placé sur le banc d'épreuve et la tête d'obturation étant en position de repos, secteurs écartés, joint au repos, de placer une douille de démontage 51 en la fixant au presse garniture 18 par des vis telles que 52 et de dévisser le presse garniture 18 qui entraîne avec lui en rotation et translation axiale la plaque de frottement 19 dont le rebord 20 tourne à l'intérieur des gorges 21 des secteurs d'appui en les tirant axialement. Les secteurs d'appui sont immobiles en rotation à cause des rainures 15 dans lesquelles pénêtrent les parties 14 des secteurs, et à cause aussi des tiges de manoeuvre 22 des secteur d'appui 13 dont l'extrémité 23 pénêtre dans une rainure en T 24 pratiquée dans les secteurs 13 common on le voit bien sur la figure 10. La douille 51 empêche les secteurs 13 de tomber et peut également servir en donnant une forme appropriée à son extrémité, d'outil de démontage du presse garniture 18.

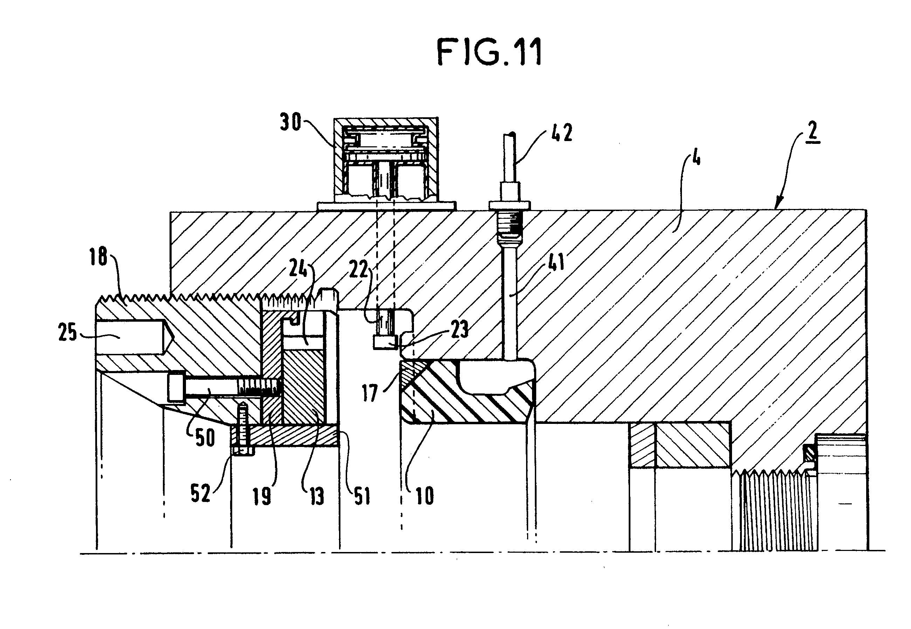

La figure 11 montre le dispositif en cours de démontage alors que les secteurs d'appui 13 sont déjà dégagés des extrémités 23 des tiges de manoeuvre 22. Le presse garniture 18 comporte des trous borgnes tels que 25 permettant l'introduction d'ergots de démontage.

Les secteurs d'appui 13 sont manoeuvrés par l'intermédiaire de tiges 22 qui comportent chacune à cet effet à leur extrémité extérieure, une plaquette 26. Les plaquettes 26 s'appuient toutes, vers l'intérieur, contre deux chambres toriques 27 et 28 en élastomère entourant le corps de tête 4 et à l'extérieur, entourant toutes les plaquettes 26, est disposée une autre chambre torique 29 en élastomère. L'ensemble est contenu dans un carter 30 fixé au corps de tête 4.

La commande de la fermeture des secteurs d'appui 13 s'effectue par la mise sous pression de la chambre torique extérieure 29 et vidange des chambres toriques intérieures 27 et 28. Inversement, l'écartement des secteurs d'appui 13 s'effectue par la mise sous pression des chambres toriques intérieures 27 et 28 et vidange de la chambre torique extérieure 29. La figure 23 montre le schéma hydraulique de commande qui va maintenant être décrit en même temps que le fonctionnement du dispositif en se référant en outre aux figures 3, 4 et 5.

Une fois le tube introduit à ses deux extrémités dans les têtes d'obturation, on commence par serrer les secteurs d'appui 13 contre le manchon 7. Pour cela, une pompe 31 entraînée par un moteur 32 aspire de l'eau dans un réservoir 33 et la refoule dans la chambre torique 29 par l'intermédiaire d'une électrovanne 34 excitée de manière à réaliser la liaison des quatres conduites 35 à 38 telle que représentée par les flèches de gauche de l'électrovanne, reliant ainsi 35 à 38 et 37 à 36. Les secteurs d'appui 13 viennent donc en appui contre le manchon 7. Presque simultanément, on exite l'électrovane 39 de manière à alimenter la chambre annulaire 40 entourant le joint 10. A cet effet, un canal 41 est percé dans le corps de tête 4 qui relie la chambre 40 à une conduite 42 reliée à la sortie d l'électrovanne 39 par l'intermédiaire d'un clapet anti-retour 43. Grâce à cette pression, par exemple de l'ordre de $5.10^6$ Pa à $10^7$ Pa (50 à 100 bars), le joint 10 se déforme et l'ensemble se trouve dans la position représentée sur la figure 4 où les secteurs 13 ferment l'espace annulaire entre le manchon 7 et la tête d'obturation et où la lèvre 44 du joint 10 vient en contact du manchon assurant une pré-étanchéité.

Lorsque cette pression de pré-étanchéité est atteinte dans la chambre 40 on remplit le tube d'eau pour l'essai d'étanchéité et on monte en pression d'essai, par exemple jusqu'à $1,5.10^8$ Pa (1500 bars). Dès que la pression dans le tube atteint la pression de pré-étanchéité existante dans la chambre 40, une vanne 45 située dans une conduite 46 reliant l'intérieur du tube à la conduite 42, est ouverte et met en communication l'intérieur du tube et la chambre 40 dont la pression monte alors simultanément avec celle existante à l'extérieur du tube.

Sous l'effet de cette très forte pression le joint 10 s'applique fortement et complètement contre le manchon 7 éliminant toute possibilité de fuite de l'eau vers l'extérieur. En outre, le joint 10 étant complètement enfermé n'a aucune possibilité de s'extruder. La figure 5 montre la position finale en cours d'essai.

Après l'épreuve, la décompression de l'eau s'effectue simultanément dans le tube et dans la chambre 40, la vanne 45 restant ouverte. Le joint 10 reprend de lui-même sa forme initiale comme représentée sur la figure 3. Les secteurs d'appui 13 sont desserrés en excitant l'électrovanne 37 de manière à réaliser la liaison entre les conduites 36, 38 et 35, 37 conformément aux flèches figuratives de droite. Bien entendu, au cours de cette opération l'électrovanne 39 est fermée de manière à ne pas alimenter la chambre 40.

## Revendications

1. Tête d'obturation (2) pour banc d'épreuve hydraulique de tubes comprenant un corps de tête (4) comportant un premier alésage (5) dans lequel peut s'introduire librement une extrémité d'un tube (1), un deuxième alésage (11) de diamètre supérieur à celui du premier alésage au fond duquel est introduit un joint élastique (10), des moyens d'amenée d'un fluide sous pression dans une chambre (40) constituée entre la périphérie extérieure du joint et ledit second alésage permettant sa contraction contre ledit tube, ledit joint étant axialement immobilisé du côté opposé à l'extrémité du tube, par une série annulaire de secteurs d'appui (13) indépendants dudit joint, lesdits secteurs comportant des moyens de commande de coulissement permettant leur serrage contre le tube ainsi que leur écartement, lesdits secteurs comportant des moyens de retenue axiale du côté opposé audit joint, caractérisée en ce que les moyens de retenue axiale des secteurs d'appui comportent un presse garniture (18) fixé sur ledit corps de tête, une plaque de frottement (19) étant en contact avec le presse garniture et comportant un rebord périphérique circulaire (20) s'engageant, en position écartée des secteurs d'appui, dans une gorge (21) réalisée à la périphérie desdits secteurs d'appui.

2. Tête d'obturation selon la revendication 1, caractérisée en ce que lesdits secteurs d'appui se recouvrent partiellement et en ce qu'un anneau anti-extrusion (17) de section en forme de coin est disposé ajusté dans ledit second alésage (11) entre le joint et lesdit secteurs d'appui.

3. Tête d'obturation selon la revendication 1, caractérisée en ce que chaque secteur d'appui est muni d'une tige de manoeuvre (22) traversant le corps de tête et dont une extrémité possède une tête (23) s'engageant dans une rainure en T (24) du secteur d'appui et dont l'autre extrémité est muni d'une plaquette (26) logée à l'intérieur d'un carter (30) entourant le corps de tête et enfermant au moins une chambre torique élastique (27, 28) située entre le corps de tête et ladite plaquette de chaque secteur d'appui (13) et une chambre torique élastique (29) située autour desdites plaquettes entre celles-ci et la paroi périphérique dudit carter, lesdites chambres comportant des moyens d'alimentation en fluide hydraulique.

4. Tête d'obturation selon la revendication 1, caractérisée en ce que les moyens pour amener un fluide sous pression dans ladite chambre (40) comprennent d'une part, une communication (41, 42, 46), muni d'une vanne (45), entre l'intérieur du tube (1), soumis au cours de l'essai à une pression hydraulique d'épreuve, et ladite chambre (40), ladite chambre (40) étant d'autre part alimentée en fluide sous pression par des moyens indépendants (31, 39, 43, 42) permettant d'assurer une pré-étanchéité.

**Claims**

1. A closure head (2) for a hydraulic tube-testing bench, the head comprising a head body (4) including a first bore (5) into which one end of a tube (1) may be freely inserted, a second bore (11) of larger diameter than the first bore with a resilient sealing ring (10) being inserted at the end of the second bore, means for conveying a fluid under pressure into a chamber (40) constituted between the outer periphery of the sealing ring and said second bore enabling the sealing ring to be contracted against said tube, said sealing ring being prevented from moving axially on its side furthest from the end of the tube by an annular series of thrust sectors (13) which are independent from said sealing ring, said sectors including sliding control means enabling them to be clamped against the tube and also enabling them to be retracted away therefrom, said sectors including axial retention means on their sides furthest from said sealing ring, the closure head being characterized in that the axial retaining means for the thrust sectors comprise a packing press (18) fixed to said head body, and a rubbing plate (19) which is in contact with the packing press and which includes a circular peripheral rim (20) which engages, when the thrust sectors are in the retracted position, in a groove (21) provided in the periphery of said thrust sectors.

2. A closure head according to claim 1, characterized in that said thrust sectors overlap partially and in that an anti-extrusion ring (17) of wedge-shaped section is fitted in said second bore (11) between the sealing ring and said thrust sectors.

3. A closure head according to claim 1, characterized in that each thrust sector is provided with an operating rod (22) passing through the body of the head and having one end with a head (23) that engages in a T-shaped groove (24) in the thrust sector and having its opposite end provided with a plate (26) received in a housing (30) surrounding the closure head body and enclosing at least one resilient toroidal chamber (27, 28) situated between the head body and said plate of each thrust sector (13) and a resilient toroidal chamber (29) situated around said plates between the plates and the peripheral wall of said housing, said chambers including means for feeding them with hydraulic fluid.

4. A closure head according to claim 1, characterized in that the means for conveying a fluid under pressure into said chamber (40) comprise firstly communication (41, 42, 46) provided with a valve (45) between said chamber (40) and the inside of the tube (1) which is subjected to a hydraulic test pressure during testing, and secondly a pressurized fluid feed via independent means (31, 39, 43, 42) enabling initial sealing to be provided.

**Patentansprüche**

1. Verschlußkopf (2) für eine hydraulische Rohrprüfbank mit einem Kopfblock (4), der eine erste Bohrung (5), in die sich ein Ende eines Rohres (1) frei einführen läßt, eine zweite Bohrung (11), die einen Durchmesser größer als der der ersten Bohrung besitzt und an deren Boden eine elastische Dichtung (10) eingeführt ist, und Mittel zum Zuführen eines unter Druck stehenden Fluids in eine zwischen der äußeren Peripherie der Dichtung und der zweiten Bohrung gebildeten Kammer (40) aufweist, die ein Anziehen der Dichtung gegen das Rohr ermöglicht, wobei die Dichtung in axialer Richtung an der dem Rohrende entgegengesetzen Seite durch eine Reihe ringförmiger, von der Dichtung unabhängiger Stützabschnitte (13) blockiert wird und die Abschnitte Gleitsteuermittel aufweisen, die sowohl ihr Festspannen gegen das Rohr als auch ihre Entfernung davon ermöglichen, und wobei die Abschnitte axiale Rückhaltemittel an der der Dichtung ent- gegengesetzten Seite aufweisen, dadurch ge- kennzeichnet, daß die Axialrückhaltemittel der Stützabschnitte einen am Kopfblock befestigten Preßansatz (18) und eine Reibplatte (19) aufweisen, die in Berührung mit dem Preßeinsatz steht und einen kreisförmigen, peripheren Kragen (20) besitzt, der in einer Abstandsposition zu den Stützabschnitten in eine Kehle (21) eingreift, die in die Peripherie der Stützabschnitte eingearbeitet ist.

2. Verschlußkopf nach Anspruch 1, dadurch gekennzeichnet, daß sich die Stützabschnitte teilweise überdecken, wobei ein das Extrudieren verhindernder Ring (17) mit keilförmigem Querschnitt justiert in der zweiten Bohrung (11) zwischen der Dichtung und den Stüzabschnitten angeordnet ist.

3. Verschlußkopf nach Anspruch 1, dadurch gekennzeichnet, daß jeder Stützabschnitt mit ei- nem den Kopfblock durchdringenden Betäti- gungsbolzen (22) versehen ist, dessen eines Ende einen Kopf (23) besitzt, der in eine T- förmige Nut (24) des Stützabschnitts eingreift, und dessen anderes Ende mit einer Platte (26) versehen ist, die im Inneren einer Trommel (30) untergebracht ist, welche den Kopfblock umgibt und mindestens eine elastische, torische Kammer (27, 28), welche zwischen dem Kopfblock und der Platte jedes Stützabschnitts (13) angeordnet ist, und eine elastische, torische Kammer (29) umschließt, die um die Platten herum zwischen den Platten und der peripheren Wand der Trommel verläuft, wobei die Kammern Mittel zum Einspeisen eines hydraulischen Fluids aufweisen.

4. Verschlußkopf nach Anspruch 1, dadurch gekennzeichnet, daß die Mittel zum Zuführen eines unter Druck stehenden Fluids in die Kammer (40) zum einen eine Verbindung (41, 42, 46) mit einem Ventil (45) zwischen dem Inneren des Rohrs (1), das während der Prüfung einem hydraulischen Prüfdruck ausgesetzt ist, und der Kammer (40) aufweisen, wobei die Kammer (40) zum anderen durch unabhängige Mittel (31, 39, 43, 42) mit einem unter Druck stehenden Fluid gespeist werden, das eine Vor-Abdichtung der Kammer bewirkt.

# FIG.1

# FIG.2

EP 0 257 455 B1

FIG.3

8

# FIG.4

EP 0 257 455 B1

FIG.5

FIG.6

4

30

2

16

16

14 13 22 17

19

10

1

7

EP 0 257 455 B1

FIG.7

19

13 14 13 14 13 22

19

20

# FIG.8

# FIG.9

# FIG.10

13

# FIG.11

EP 0 257 455 B1